# EUROPÄISCHE PATENTSCHRIFT

(11) **EP 1 602 257 B1**
(45) Veröffentlichungstag und Bekanntmachung des Hinweises auf die Patenterteilung: **21.06.2006**
(21) Anmeldenummer: 04719361.0
(22) Anmeldetag: 11.03.2004
(51) Int. Cl.: H04Q 7/38, G06Q 30/00

(54) **VERFAHREN ZUR ERMÖGLICHUNG DER EINDEUTINGEN IDENTIFIZIERUNG EINER KOMBINATION MEHRERER EINZELPRODUKTE**
METHOD FOR ENABLING A COMBINATION OF SEVERAL INDIVIDUAL PRODUCTS TO BE IDENTIFIED CLEARLY
PROCEDE PERMETTANT L'IDENTIFICATION UNIVOQUE D'UNE COMBINAISON DE PLUSIEURS PRODUITS INDIVIDUELS

(30) Priorität: 11.03.2003 DE 10310871
(43) Veröffentlichungstag der Anmeldung: 07.12.2005
(73) Patentinhaber: T-Mobile Deutschland GmbH, 53227 Bonn (DE)
(72) Erfinder: GRUNDHOFF, Ralf, 53639 Königswinter (DE); STRAUCH, Volkmar, 53560 Vettelschoss (DE)
(74) Vertreter: Riebling, Peter
(86) Internationale Anmeldenummer: PCT/DE2004/000486
(87) Internationale Veröffentlichungsnummer: WO 2004/082313

(56) Entgegenhaltungen:
- US-A- 5 887 253
- US-B1- 6 393 408

## Beschreibung

Die Erfindung betrifft ein Verfahren zur Ermöglichung der Identifizierung einer Kombination mehrerer Einzelprodukte (Produktbundle) zwecks produktkomponentenabhängiger Warenverfolgung, zum Verkauf und zur Prämierung beim Verkauf dieses Produktbundles.

Produktpakete in Form von sogenannten Bundles existieren im Mobilfunkbereich bereits seit einiger Zeit. Erfahrungen mit Bundles liegen insbesondere in der Vermarktung von sogenannten Prepaid-Angeboten vor. Hier werden z.B. ein Mobilfunkendgerät und eine Mobilfunkkarte (SIM) zusammen im Paket vertrieben. Durch entsprechende Subventionierung kann ein solches Bundle in der Regel günstiger angeboten werden als die Einzelkomponenten, da dem subventionierten Endgerät bereits eine SIM-Karte des Netzbetreibers beiliegt. Eine Verknüpfung von Endgerätetyp und Mobilfunkkarte und/oder Dienst/Tarif erfolgt jedoch nicht. Wesentlicher Mangel hierdurch ist, dass ein Paket nicht nach Endgerätetypen und/oder mit dem Endgerät verknüpften Diensten bzw. Tarifen differenziert verprovisioniert/subventioniert werden kann. Daraus folgt, dass beim Abverkauf zum Beispiel nicht nach Endgerätewertigkeit subventioniert werden kann, und der Netzbetreiber nicht weiß, welcher Kunde welches Endgerät erworben hat. Ferner kann der Netzbetreiber dann nicht genau wissen, welches Paket mit welchem Endgerät nachgeordert werden muss (Warenverfolgung). Die Verwendung bisheriger Endgerätesteuerungs- und Vermarktungsmöglichkeiten lässt sich somit nur bedingt nach Endgeräten differenzieren.

Es ist bekannt in Mobilfunknetzen die sogenannte Internationale Mobilfunkgerätekennung (International Mobile Equipment Identity: IMEI) zu erfassen. Die IMEI ist eine eineindeutige, gerätespezifische, elektronische Identifizierungsnummer von Mobilfunkendgeräten, die in GSM-Netzen verwendet wird. Diese Nummer besteht aus dem Typencode und einer fortlaufenden herstellerabhängigen Fertigungsnummer. Die IMEI wird unter anderem in einer Gerätedatenbank (EIR) des Mobilfunknetzes erfasst, kann vom Netz abgefragt werden und ermöglicht z. B. die Lokalisierung von gestohlen gemeldeten Geräten sowie deren Sperrung. Mangel hier ist, dass die IMEI nicht mit der SIM-Mobilfunkkarte und Tarifen / Diensten verknüpft sind, und die Gefahr besteht, dass die IMEI selbst zur Handelsware wird (Fraud-Risiko), wenn die Verprovisionierung darauf fußt, dass bei Abverkauf die sog. "gekaufte IMEI" zusätzlich zu den Aktivierungsdaten von seiten des Händlers erfaßt wird. Ob dieses Gerät dem Kunden tatsächlich ausgegeben wurde ist nicht sichergestellt, und kann allenfalls über eine Netzauswertung (sog. "genutzte IMEI") erfaßt werden. Dies ist jedoch zum einen datenschutzrechtlich bedenklich, und zum anderen steht diese Information nicht zum Zeitpunkt des Verkaufs zur Verfügung, da hierzu das Gerät zum Zeitpunkt des Verkaufs in Betrieb sein müsste.

SIM-Karten besitzen eine Chipkarten-Identifikationsnummer (engl.: IC-Card IDentification, (U)ICC-ID + (U)ICC-UMTS-Karten), die bereits bei der Herstellung in den Chip einprogrammiert wird und für jede Chipkarte weltweit einzigartig ist. Ein Auslesen dieser Identifikationsnummer ist prinzipiell jederzeit möglich. Sie wird aber nicht über das GSM-Netz in die Abrechnungssysteme übertragen sondern über die Aktivierungskette, und kann nicht verändert werden. Im Abrechnungssystem des Netzbetreibers wird die SIM-Seriennummer als Referenznummer zum Datensatz eines Kunden eingesetzt. Auf Grund dieser Zuordnung kann der zu einer Chipkarte gehörende Kunde bestimmt werden.

Die US 5 887 253 A offenbart ein Verfahren zur Kennzeichnung und Validierung eines zellularen Telefons für die Aktivierung und für die folgende Wartung nach der Aktivierung. Ein zellularer Diensterbringer spezifiziert die internationale Mobile Teilnehmeridentität (IMSI) für ein Teünehmeridentitätsmodul (SIM), erzeugt eine Mobiltelefonnummer (MSISDN), vernüpft die MSISDN mit der IMSI in einer Tabelle und ordert ein SIM von einem SIM-Hersteller. Der SIM-Herstellerhersteller stellt das SIM her, programmiert die IMSI in das SIM, bringt eine SIM-Seriennummer auf dem SIM auf, sendet die CSP(cellular service provider)-Informationen, welche die SIM-Seriennummer mit der IMSI verknüpft und schickt das SIM zu einem Auslieferungslager. Ein Hardwareverkäufer schickt ein Mobiltelefon und eine internationale Gerätenummer (IMEI) für das Mobiltelefon zum Auslieferungslager. Das Auslieferungslager baut das SIM und das Mobiltelefon zusammen, um ein zellulares Telefon zu bilden, erzeugt eine Produktpaketnummer für das zellulare Telefon, schickt das zellulare Telefon zu einem Bestimmungsort und schickt die Informationen hinsichtlich sind der SIM-Seriennummer, der IMEI und der Produktpaketnummer zum CSP. Der CSP aktualisiert die Tabelle, um die IMSI-, IMEI-, SIM-Seriennummer, Produktpaketnummer und MSISDN zu verknüpfen. Der CSP hat folglich die kompletten Informationen hinsichtlich die des zellularen Telefons, kann die Identität des zellularen Telefons für die Gültigkeitserklärung überprüfen, bevor dem Inhaber uneingeschränkter Gebrauch des zellularen Telefons erlaubt wird.

Die US 6 393 408 B1 betrifft ein Verteilungssystem für drahtlose Kommunikationsprodukte. Dieses System umfasst eine automatisierte Managementtechnik für das Verwalten von Warenbestanddaten, Bestelldaten, Herstellungsdaten und Versanddaten betreffend Warenpakete von drahtlosen Kommunikationsprodukten unterschiedlicher Konfigurationen.

WO 98 28676 A2 beschreibt ein System und ein Verfahren, in denen ein Medikamentenauslieferungslager eine Computersoftware zum Warenbestandsmanagement für Medikamente betreibt und elektronisch mit einem Computer einer Einrichtung für medizinische Versorgung verbunden ist, um eine Medikamentenverteilung zu den Patienten zu betreiben.

Die Aufgabe der vorliegenden Erfindung besteht darin, eine Chipkarte (SIM, (U)ICC) und ein Mobilfunkendgerät miteinander zu verknüpfen, um den Verkauf nicht nur bezüglich der freigeschalteten Tarife, sondern auch um die Kenntnis des verkauften Endgerätes - unter Umständen passend zum Tarif - zu ergänzen. Ein weiteres Bedürfnis besteht u.a. darin, die Kapitalbindung der Lagerhaltung durch vom Endgerätehersteller erworbene Geräte durch eine Warenverfolgung zu optimieren. Die Messbarkeit soll hergestellt werden.

Diese Aufgabe wird erfindungsgemäß durch ein Verfahren gemäß den Merkmalen des Patentanspruchs 1 gelöst.

Erfindungsgemäß werden Endgerät und SIM-/(U)ICC-Mobilfunkkarte - und optional spezifische (mögliche und/oder tatsächlich georderte) Tarife / Dienste - durch Verknüpfung der Mobilfunkkartenkennung (U)ICC-IC und der Materialnummer des Endgerätes als Typenkennzeichnung dieses Endgerätes durch die Zuordnung einer Europäische Artikelnummer (EAN Code) für diese Art der Gerätekombinationen in einer EAN-Datenbank miteinander verknüpft. Diese Verknüpfung erlaubt es, endgerätespezifische und/oder dienstespezifische Pakete mit Mobilfunkkarten in einem Paket / Bundle zu vermarkten.

Die Europäische Artikelnummer (EAN) ist ein in Europa standardisierter Barcode für die Datenerfassung von Produkten mittels Barcode- oder Strichcodeleser. Die EAN-Codierung ist eine Strich-/Balkencodierung, die einheitliche Hersteller- und Landeskennzeichnungen enthält. Darüber hinaus die herstellerspezifische Artikelnummer sowie ein Prüfzeichen. Der EAN-Code kann in Geschäften mit eigenen Artikelkennzeichnungen und Preisen versehen werden, die beim Scannen des Strichcodes aus dem Server ausgelesen werden.

Das Produktbundle besteht aus einem Mobilfunkendgerät und einer SIM-(U)ICC-Karte, wobei dem Mobilfunkendgerät eine Materialnummer als Typenbezeichnung und der SIM-Chipkarte eine eindeutige Chipkarten-Identifikationsnummer ((U)ICC-ID) zugeordnet ist. Gemäß einer bevorzugten Ausführungsform der Erfindung erfolgt ein Erfassen der (U)ICC-ID der Chipkarte vor Lieferung an eine Verkaufsstelle (POS) und ein Abspeichern der (U)ICC-ID zusammen mit den Lieferdaten (u. a. der Materialnummer) und der, dieser Kombination (Bundle) zugeordneten Europäischen Artikelnummer (EAN) in der zentralen EAN-Datenbank. Bei Vertragsabschluss eines Kunden in einer Verkaufsstelle werden die (U)ICC-ID der Chipkarte und die EAN des Bundles zusammen mit den zugehörigen Vertragsdaten erfasst. Diese Daten werden von der Verkaufsstelle an eine Datenbank zur Kundenverwaltung übermittelt und dort gespeichert. Es erfolgt ein Abgleich der Daten der Kundenverwaltung mit den Daten der EAN-Datenbank anhand der (U)ICC-ID und der Vertragsdaten zur individuellen Verprovisionierung / Subventionierung und Warenverfolgung.

Vorteilhaft kann die EAN in der Verkaufsstelle über Barcodescanner erfasst werden.

Erfindungsgemäß ist die Verkaufsstelle nicht auf Ladengeschäfte beschränkt, sondern kann alternativ ein online-Shop oder dergleichen sein.

Die Vorteile der Erfindung sind die folgenden:

Es wird eine Verknüpfung von Endgerät und Mobilfunkkarte zur Absicherung und Steuerung der Netzbetreibersubventionierung erreicht.

Es ist möglich, eine Subventionierung / Verkaufsverprovisionierung von Endgeräten auch nach der Wertigkeit des Endgerätes bzw. des Paketes vorzunehmen.

Die Warenverfolgung, das heißt die Kenntnis, wann, wo, wie viele Endgeräte eines Typs verkauft wurden, wird vereinfacht. Daraus folgt eine Verringerung der Kapitalbindung und optimale Lagerreichweiten durch eine genauere Planbarkeit.

Es kann ein Exklusivvermarktungsverfahren für z.B. proprietäre Endgeräte und Geräte im Co-Branding erfolgen.

Es wird eine Dienste- / Tarifvermarktungsform durch Bundling mit dem Paket ermöglicht. Eine spezifische Verprovisionierung des Verkaufs erfolgt z.B. erst bei Verkauf des Paketes mit einem bestimmten, auf das Paket und damit das Endgerät passenden Tarif/Dienst.
Endgerätespezifische und Kartenspezifische Produktkonfigurationen können miteinander eindeutig verknüpft werden (z. B. spezielle SIM (U)ICC).

Der Handel profitiert von der Lagerhaltung auf Basis der Erfassung der EAN-Codes in den Warenwirtschaftssystemen, der Netzbetreiber durch die zusätzliche Kenntnis der zu einem EAN-Code gehörenden (U)ICC-ID.

Zusätzlich können für das Marketing relevante Kundendaten angereichert werden. Dies versetzt den Betreiber in die Lage, Kunden z.B. nach Endgerätetypen zu segmentieren bzw. soziodemografische Analysen über das Kundenkaufverhalten bzgl. der Tarife und Endgeräte werden ermöglicht. Der Betrieber weiß sodann beispielsweise, welcher Kundentyp welchen Endgerätetyp kauft.

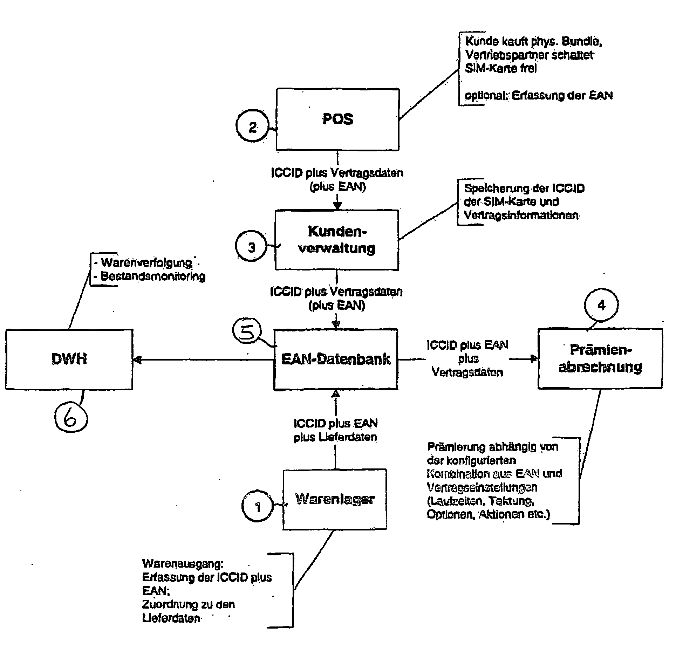

Ein Ausführungsbeispiel der Erfindung wird nun anhand der Zeichnungsfigur näher beschrieben. Aus der Zeichnung und ihrer Beschreibung ergeben sich weitere Merkmale, Vorteile und Anwendungsmöglichkeiten der Erfindung.

Die Zeichnungsfigur zeigt schematisch die wesentlichen Schritte und Einrichtungen zur Durchführung des Verfahrens.

Voraussetzung für die Durchführung des Verfahrens ist, dass das Produkt, das heißt das physische Bundle, aus mind. einer SIM-Karte und einem Endgerät besteht. Dem jeweiligen Produktbundle ist eine eindeutige EAN zugeordnet. Die SIM-Karte besitzt genau eine (U)ICC-ID. Einer Vertragsnummer eines Kunden kann somit genau eine (U)ICC-ID und eine dazugehörige EAN zugeordnet werden.

Beim Warenausgang eines Bundles aus einem Warenlager 1 wird die (U)ICC-ID der Chipkarte mit der Materialnummer des Endgerätes erfasst und zusammen mit den Lieferdaten einer EAN zugeordnet.

Die erfassten Daten, das heißt (U)ICC-ID, EAN und Lieferdaten werden gemeinsam in einer EAN-Datenbank 5 gespeichert.

Sobald ein Kunde in der Verkaufsstelle (2) einen Mobilfunkvertrag abschließt und ein Bundle erhält, wird im POS (2) neben den Vertragsdaten die (U)ICC-ID der SIM-Karte und die EAN des erworbenen Bundles registriert (optional kann auch die IMEI des Endgeräts mit erfasst werden).

Die (U)ICC-ID, EAN und die Vertragsdaten des Kunden werden vom POS (2) an eine Datenbank einer Kundenverwaltung (3) übergeben. Dort erfolgt eine Speicherung der (U)ICC-ID, der EAN und der Vertragsdaten.

Die (U)ICC-ID, EAN und die Vertragsdaten des Kunden werden von der Kundenverwaltung 3 an die EAN-Datenbank (5) übergeben. Dort erfolgt ein Abgleich der Daten der Kundenverwaltung (3) mit den bereits vorhandenen Daten in der EAN-Datenbank (5) anhand der eindeutigen (U)ICC-ID.

Unter Verwendung der (U)ICC-ID, der EAN, der Vertragsdaten kann eine Prämienabrechnung (4) in Abhängigkeit von der konfigurierten Kombination, wie z.B. Vertragslaufzeit, Taktung, Optionen, Aktionen, etc. durchgeführt werden.

In einem Data Warehouse (6) (DWH) kann anhand der Daten der EAN-Datenbank eine Warenverfolgung und ein Bestandsmonitoring durchgeführt werden. Data Warehousing beschreibt einen Prozess der optimierten Informationslogistik mit der Zielsetzung, die richtigen Informationen, extrahiert aus einer Vielzahl interner und externer Informationsquellen, zum richtigen Zeitpunkt mit der erforderlichen Performance, in der richtigen Aufbereitung, dem richtigen Adressaten unaufgefordert, unter Beachtung des Wirtschaftlichkeitsprinzips zur Verfügung zu stellen

## Patentansprüche

1. Verfahren zur Ermöglichung der Identifizierung einer Kombination mehrerer Einzelprodukte, in Form eines Produktbundle, zwecks produktkomponentenabhängiger Warenverfolgung und zum Verkauf dieser Kombination, wobei diese mindestens ein typengekennzeichnetes Mobilfunkendgerät und eine eindeutig durch eine Chipkarten-Identifikationsnummer, ICC-ID oder UICC-ID, identifizierbare SIM-Karte enthält, wobei die Typenkennzeichnung des Mobilfunkendgerätes mit der Chipkarten-Identifikationsnummer der SIM-Karte in einer Datenbank verknüpft werden und der Kombination als neues Produkt eine Europäische Artikelnummer, EAN, zugeordnet wird, wobei jede einzelne Kombination durch die Chipkarten-Identifikationsnummer der jeweils beiliegenden SIM-Karte eindeutig identifizierbar ist, mit den Schritten:
- Erfassen der Chipkarten-Identifikationsnummer der Chipkarte vor Lieferung an eine Verkaufsstelle (2), POS, und Abspeichern der Chipkarten-Identifikationsnummer zusammen mit den Lieferdaten und der Europäischen Artikelnummer, EAN, der Kombination in einer zentralen EAN-Datenbank (5);
- Erfassen der Chipkarten-Identifikationsnummer der Chipkarte, der Europäischen Artikelnummer, EAN, der veräußerten Kombination und der zugehörigen Vertragsdaten bei Vertragsabschluss eines Kunden in einer Verkaufsstelle (2);
- Übermitteln dieser Daten von der Verkaufsstelle (2) an eine Kundenverwaltungsdatenbank (3) und Speicherung der Chipkarten-Identifikationsnummer und der Europäischen Artikelnummer, EAN, zusammen mit den Vertragsdaten in dieser Kundenverwaltungsdatenbank;
- Übermittlung dieser Daten an die EAN-Datenbank (5);
**gekennzeichnet durch** die Schritte :
- Abgleich der Daten aus der Kundenverwaltungsdatenbank (3) mit den Daten der EAN-Datenbank (5) anhand der Chipkarten-Identifikationsnummer; und
- Bereitstellung der Chipkarten-Identifikationsnummer, der Vertragsdaten und der Europäischen Artikelnummer, EAN, zur individuellen Prämienabrechung (4) und Warenverfolgung (6), wobei die beim Vertragsabschluss zum Verkauf einer jeden Kombination vorliegenden Daten über Tarif und Dienste dem Datensatz der jeweiligen Kombination hinzugefügt werden in Form einer Erweiterung des Bundles um eine weitere Dienst- bzw. Tarifkomponente.

2. Verfahren nach Anspruch 1, **dadurch gekennzeichnet, dass** in der Verkaufsstelle (2) und bei Warenausgang zusätzlich die IMEI erfasst wird und ebenfalls mit der (U)ICC-ID verknüpft wird.

3. Verfahren nach einem der Ansprüche 1 oder 2, **dadurch gekennzeichnet, dass** die Verkaufsstelle ein Ladengeschäft oder ein online-Shop ist.

## Claims

1. Method enabling the identification of a combination of a plurality of individual products in the form of a product bundle for the purpose of tracking goods as a function of product components and for the sale of this combination, wherein the latter contains at least one type-identified mobile communications terminal device and a SIM card uniquely identifiable by a chip card identification number, ICC-ID or UICC-ID, wherein the type identification of the mobile communications terminal device and the chip card identification number of the SIM card are linked in a database and a European Article Number, EAN, is assigned to the combination as a new product, wherein each individual combination is uniquely identifiable by the chip card identification number of the SIM card appended in each case, having the steps:
- capture of the chip card identification number of the chip card prior to delivery to a point of sale (2), POS, and storage of the chip card identification number together with the delivery data and the European Article Number, EAN, of the combination in a central EAN database (5);
- capture of the chip card identification number, the European Article Number, EAN, of the combination sold and the associated contract data on conclusion of a contract by a customer at a point of sale (2);
- transmission of these data from the point of sale (2) to a customer administration database (3) and storage of the chip card identification number and the European Article Number, EAN, together with the contract data in this customer administration database;
- transmission of these data to the EAN database (5); **characterised by** the steps:
- comparison of the data in the customer administration database (3) with the data in the EAN database (5) on the basis of the chip card identification number; and
- provision of the chip card identification number, the contract data and the European Article Number, EAN, for the individual bonus statement (4) and goods tracking (6), wherein the tariff and services data accumulated on conclusion of contract for the purchase of each combination are added to the data set of the combination in question in the form of an extension of the bundle by another service or tariff component.

2. Method according to claim 1, **characterised in that** at the point of sale (2) and at goods outwards the IMEI is additionally captured and is likewise linked to the (U)ICC-ID.

3. Method according to any of claims 1 or 2, **characterised in that** the point of sale is a shop or an online shop.

## Revendications

1. Procédé permettant l'identification d'une combinaison de plusieurs produits individuels, ayant la forme d'un lot de produits, et ce à des fins de suivi de marchandise en fonction des composants de produit et pour la vente de cette combinaison, celle-ci contenant au moins un terminal de radiotéléphonie, dont le modèle est identifié, et une carte à module d'identification d'abonné (carte SIM) identifiable sans équivoque par un numéro d'identification de carte à puce, ICC-ID (identification de carte à puce) ou UICC-ID (identification de carte à puce universelle), l'identification de modèle du terminal de radiotéléphonie étant combinée au numéro d'identification de carte à puce de la carte SIM dans une banque de données, et un numéro européen d'article, EAN (European article number) étant associé à la combinaison considérée en tant que nouveau produit, chaque combinaison particulière pouvant être identifiée sans équivoque par le numéro d'identification de carte à puce de la carte SIM qui est chaque fois jointe, lequel procédé comprend les étapes suivantes :
- enregistrement du numéro d'identification de carte à puce de la carte à puce avant livraison à un point de vente (2), POS (point of sale), et enregistrement en mémoire du numéro d'identification de carte à puce conjointement avec les données de livraison et le numéro européen d'article, EAN, de la combinaison dans une banque de données centrale de numérotation européenne des articles (5) ;
- enregistrement du numéro d'identification de carte à puce de la carte à puce, du numéro européen d'article, EAN, de la combinaison vendue et des données de contrat associées lors de la conclusion d'un contrat par un client dans un point de vente (2);
- transmission de ces données par le point de vente (2) à une banque de données de gestion de la clientèle (3) et mise en mémoire du numéro d'identification de carte à puce et du numéro européen d'article, EAN, conjointement avec les données de contrat, dans ladite banque de données de gestion de la clientèle ;
- transmission de ces données à la banque de données de numérotation européenne des articles (5) ;
ledit procédé étant **caractérisé par** les étapes suivantes :
- comparaison des données issues de la banque de données de gestion de la clientèle (3) avec les données de la banque de données de numérotation européenne des articles (5) à l'aide du numéro d'identification de carte à puce ; et
- mise à disposition du numéro d'identification de carte à puce, des données de contrat et du numéro européen d'article, EAN, pour le calcul de prime individuel (4) et le suivi de marchandise (6), les données existantes sur le tarif et les services lors de la conclusion du contrat de vente de toute combinaison étant ajoutées à la série de données relative à la combinaison concernée sous forme d'extension du lot à un autre élément de service ou de tarif.

2. Procédé selon la revendication 1, **caractérisé en ce qu'**en plus, dans le point de vente (2) et lors de la sortie de la marchandise, on enregistre l'identité internationale d'équipement mobile (IMEI) et on la combine également à l'identification (U)ICC-ID.

3. Procédé selon l'une des revendications 1 ou 2, **caractérisé en ce que** le point de vente est un magasin classique ou une boutique en ligne.
